# EUROPEAN PATENT APPLICATION

(11) **EP 0 794 030 A1**
(43) Date of publication of application: **10.09.1997**
(21) Application number: 97103662.9
(22) Date of filing: 05.03.1997
(51) Int. Cl.: B23K 20/227, B23K 20/02, F01L 3/22

(54) **Method for joining metals and valve seat provided in a cylinder head**

(30) Priority: 05.03.1996 JP 47657/96
(71) Applicant: YAMAHA HATSUDOKI KABUSHIKI KAISHA, Iwata-shi Shizuoka-ken, 438 (JP)
(72) Inventor: Adachi, Shuhei, Iwata-shi, Shizuoka-ken (JP); Inami, Junishi, Iwata-shi, Shizuoka-ken (JP)
(74) Representative: Grünecker, Kinkeldey, Stockmair & Schwanhäusser Anwaltssozietät

(57) **Abstract**

A method for joining metals having different melting points by bonding same to each other under high temperatures, the temperature during the bonding operation is equal to or lower than a solidus temperature of the one metal having a lower melting point.

## Description

The present invention relates to a method for joining metals having different melting points by bonding same to each other under high temperatures and to a valve seat provided in a cylinder head of an internal combustion engine, the metal of said valve seat having a higher melting point than that of the metal of said cylinder head.

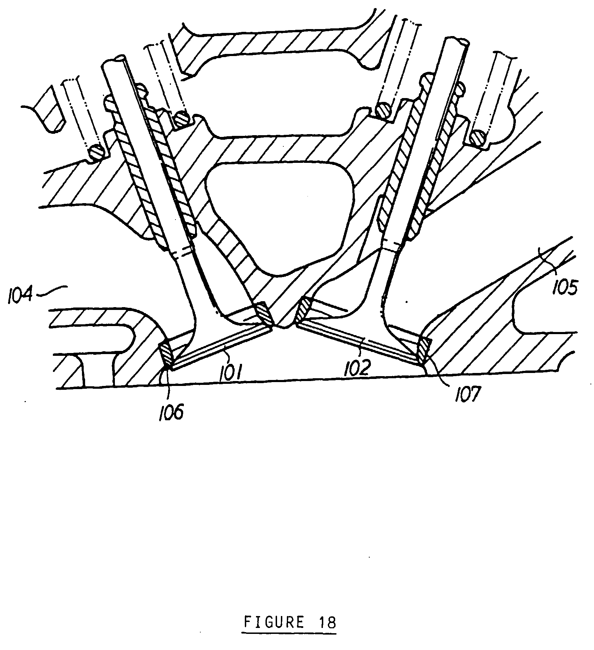

In a four-cycle engine, for example, the intake and exhaust ports that open into the combustion chambers are opened and closed by intake and exhaust valves in accordance with the corresponding timing to perform the required gas exchange. Valve seats designed to intermittently accommodate the intake and exhaust valves are commonly assembled by being press-fitted along the rims of openings in the intake and exhaust ports of cylinder heads. As shown, for example, in Figure 18, valve seats 106 and 107 designed to intermittently accommodate an intake valve 101 and an exhaust valve 102, respectively, are mounted by press fitting along the rims of the openings in the intake port 104 and exhaust port 105 of a cylinder head 103.

Press-fitted valve seats are designed relatively thick because of the need to ensure the necessary strength and stiffness, and are made relatively tall due to the requirements for a prescribed press-fit. The result is that the distance between valves is increased in multi-valve engines equipped with a plurality of valves, imposing limitations on increasing the valve diameter or on placing the valves closer to the center of the combustion dome, and making it impossible to increase the gas intake.

Meanwhile, increasing the number of valves has recently been adopted as a way of achieving higher speeds in the field of internal combustion engines, and a plurality of intake and exhaust ports are now being installed close to each other in the gas cylinders of cylinder heads. The result is that the distance between the cylinder head ports gradually decreases and that cracks form between the ports and other problems occur when valve seats are press-fitted along the rims of intake and exhaust ports by means of conventional technology under such conditions.

In view of this, attempts have been made, for example, to manufacture valve seats from iron-based sinters and to join these along the rims of the intake and exhaust ports of cylinder heads by resistance heat joining techniques. Such resistance heat joining techniques are methods in which dissimilar metal materials having different melting points are metallurgically joined by forming a plastic deformation layer at least on the low-melting material side of the joining interface without forming a molten reaction layer.

It is not always easy, however, to join dissimilar metal materials having different melting points with sufficient strength by the aforementioned resistance heat joining techniques, and for some types of metal materials it is impossible to achieve a joining strength capable of withstanding actual use. In other words, the common joining conditions needed to ensure the strength required to join two metal materials have not yet been discovered.

Accordingly, it is an objective of the present invention to provide an improved method for joining metals as indicated above facilitating an always reliable joining between metals.

According to the present invention, this objective is solved for a method as indicated above in that the temperature during the bonding operation is equal to or lower than a solidus temperature of the one metal having a lower melting point.

In order to further enhance the joining, it is advantageous when a plastic deformation layer at least on the side of the metal having the lower melting point is formed.

According to a preferred and advantageous embodiment of the present invention, the temperature during the bonding operation is maintained within a temperature range in which the metal having the lower melting point can move as a plastified flow near the joining or bonding interface although still remaining in the solid phase.

An advantageous joining is achievable when the penetration depth of the metal having the higher melting point into the metal having the lower melting point is controlled by controlling the supply pattern of the applied electric current to an electrode and/or the apply pattern of the bonding pressure by the electrode and/or the displacement velocity pattern of the electrode.

It is a further objective of the present invention to provide an improved valve seat as indicated above having an always reliable and improved bonding strength.

According to the present invention, this objective is solved for a valve seat as indicated above in that a difference between the respective solidus temperatures is equal to or higher than 340°C.

An advantageous bonding strength is achievable when the valve seat is composed of an iron-based sinter and that the cylinder head is composed of cast aluminum alloy.

The invention therefore allows dissimilar metal materials to be metallurgically joined by a resistance heat joining technique, and because the temperature during the process for joining the low-melting material is kept at or below the solidus temperature of said low-melting material, it is possible to prevent a molten reaction layer from forming at the joining interface between the two metal materials, to firmly and metallurgically join the two metal materials by the solid-phase diffusion of the metal atoms that constitute the two metal materials, and to join the dissimilar metal materials with sufficient strength. Heating at least the low-melting material to a temperature at or above the solidus temperature thereof increases the thickness of the oxide film formed on the joining surfaces of the metal materials, forms a molten reaction layer near the joining interface, and allows the thick oxide film to penetrate the molten reaction layer, lowering the joining strength of the two metal materials.

Because another embodiment of the invention involves keeping the temperature during the process for joining the low-melting material within a temperature range in which said low-melting material can move as a plastic flow while remaining in the solid phase near the joining interface, the oxide film that has formed on the joining surface of the metal materials or the debris that has adhered to the joining surface is broken up by the plastic flow near the joining interface of the low-melting material and are removed from the joining interface, preventing the oxide film or debris from being entrained by the joining interface, creating a sound joining interface as a result of direct contact between the two metal materials, and making it possible to firmly join the dissimilar metal materials.

Because a further embodiment of the invention involves keeping the temperature during the process for joining the low-melting material within the characteristic temperature range of said low-melting material close to the solidus temperature thereof, the residual stress at the plastic deformation layer is kept low, the plastic flow near the joining interface of the low-melting material is activated, the oxide film that has formed on the joining surface of the metal materials or the debris that has adhered to the joining surface is actively removed from the joining interface by the plastic flow of the low-melting material, and the dissimilar metal materials are joined even more firmly.

Because a still further embodiment of the invention involves preventing the temperature during the process for joining the high-melting material from exceeding the phase transition temperature of said high-melting material, the pronounced hardening caused by the phase transition of said high-melting material is prevented, and the functions required for the high-melting material are not impaired.

According to another embodiment of the invention, the extent to which the high-melting material sinks into the low-melting material can be set to a value required by design considerations.

A further embodiment of the invention involves setting the time during which electric current is passed through the electrodes to the necessary level sufficient for at least the low-melting material to move as a plastic flow while remaining in the solid phase, and hence has the same effect as the invention defined in claim 3.

According to a still further embodiment of the invention, a valve seat of an internal combustion engine can be firmly joined to a cylinder head.

Other preferred embodiments of the present invention are laid down in further dependent claims.

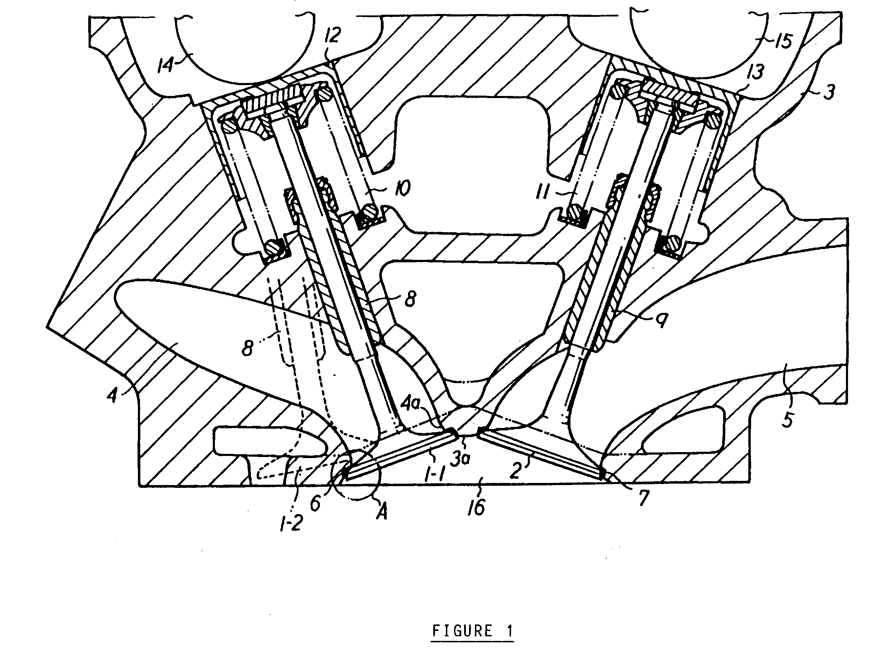

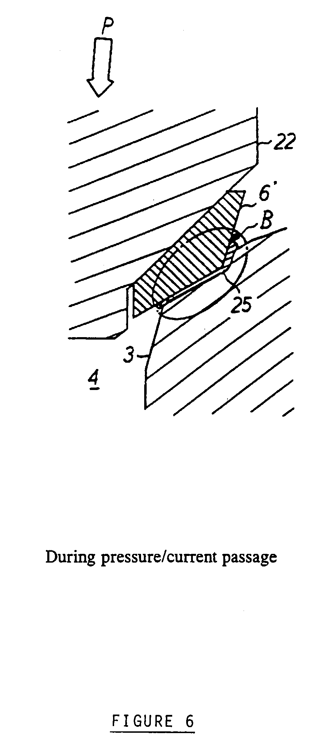

In the following, the present invention is explained in greater detail with respect to several embodiments thereof in conjunction with the accompanying drawings, wherein:
[ Figure 1 ]
   A longitudinal section of a cylinder head of a four-cycle engine equipped with joined-type valve seats,
[ Figure 2 ]
   An expanded detailed view of portion A (valve seat portion on the intake side) in Figure 1,
[ Figure 3 ]
   A partial cross section illustrating the joining process for a joined-type valve seat,
[ Figure 4 ]
   A schematic block diagram of a resistance welding apparatus,
[ Figure 5 ]
   A partial cross section illustrating the process for joining a valve seat,
[ Figure 6 ]
   A partial cross section illustrating the process for joining a valve seat,
[ Figure 7 ]
   A partial cross section illustrating the process for joining a valve seat,
[ Figure 8 ]
   A partial cross section illustrating the process for joining a valve seat,
[ Figure 9 ]
   A partial cross section illustrating the process for joining a valve seat,
[ Figure 10 ]
   An expanded detailed view of portion B in Figure 6,
[ Figure 11 ]
   A diagram depicting the supplied electric current, the welding pressure, and the axial displacement pattern of an electrode,
[ Figure 12 ]
   A diagram depicting the supplied electric current, the welding pressure, and the axial displacement pattern of an electrode,
[ Figure 13 ]
   A diagram depicting the temperature ranges for the joining processes involving various cylinder head materials (AC4C, AC4B, AC2B),
[ Figure 14 ]
   A diagram depicting a TMA curve observed during the heating of an iron-based sinter for a valve seat,
[ Figure 15 ]
   A diagram depicting the structure of the area around the joining interface between a valve seat and a cylinder head,
[ Figure 16 ]
   A diagram depicting the results obtained by measuring the joining strength (peel load) of valve seats,
[ Figure 17 ]
   A diagram depicting the results obtained by measuring the joining strength (peel load) of valve seats immediately after joining, as well as the joining strength (endurance strength) following endurance tests (after a temperature of 300°C had been maintained for 24 hours), and
[ Figure 18 ]
   A longitudinal section of a cylinder head of a four-cycle engine equipped with press-fitted valve seats.

A practical embodiment of the present invention will now be described on the basis of the accompanying drawings.

In the practical embodiment described, valve seats of a four-cycle engine are joined to cylinder heads by the method of the present invention.

The cylinder head structure of the four-cycle engine will first be described on the basis of Figure 1.

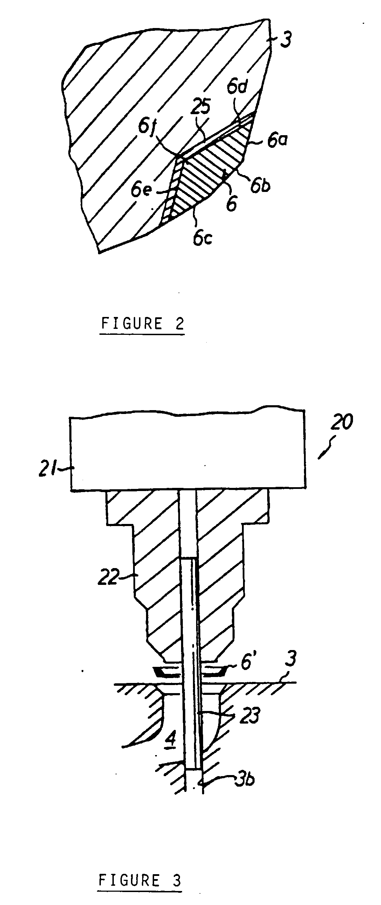

Figure 1 is a longitudinal section of a cylinder head of a four-cycle, five-valve engine, and Figure 2 is an expanded detailed view of portion A (valve seat portion on the intake side) in Figure 1. In this four-cycle engine, each gas cylinder is equipped with three intake valves 1-1 and 1-2 (1-1 designates the intake valves on both sides, and 1-2 designates the intake valve in the center (center valve)) and two exhaust valves 2. Three intake ports 4 and two exhaust ports 5, which are provided on a cylinder head 3 made of a lightweight cast aluminum alloy, are opened and closed by the aforementioned intake valves 1-1 and 1-2 and exhaust valves 2 with the proper timing, whereby the necessary gas exchange is achieved. JIS AC2B, AC4B, AC4C, or the like can be selected as the cast aluminum alloy, a material for the cylinder head 3.

A concave combustion dome 3a constituting a combustion chamber 16 is formed on the bottom surface of the aforementioned cylinder head 3, and valve seats 6 and 7 designed to intermittently accommodate the aforementioned intake valves 1-1 and 1-2 and exhaust valves 2, respectively, are mounted along the rims of openings in the combustion chamber 16 of the aforementioned intake ports 4 and exhaust ports 5 formed in the cylinder head 3.

The intake valves 1-1 and 1-2 and exhaust valves 2 are slidably passed through valve guides 8 and 9, respectively, and these are actuated in the direction of closure by valve springs 10 and 11. The intake valves 1-1 and 1-2 and the exhaust valves 2 are driven with the proper timing by rotating cams 14 and 15 that slide in valve lifters 12 and 13.

The valve seats 6 and 7 will now be described.

In the practical embodiment under consideration, the valve seats 6 and 7 are joined-type valve seats which are shaped as rings from an iron-based sinter having excellent impact resistance, abrasion resistance, and high-temperature strength and which are metallurgically joined to the cylinder head 3 by the resistance heat joining technique pertaining to the present invention. The iron-based sinter of said valve seats 6 and 7 is filled with copper or another metal by infiltration in order to endow the valve seats 6 and 7 with high thermal conductivity, impact resistance, or the like.

Details of a joint of the intake-side valve seat 6 are shown here in Figure 2. A plastic deformation layer 25 described below is formed on the side of the cylinder head 3, with the joining interface between said valve seat 6 and cylinder head 3 serving as a boundary. Three tapered surfaces 6a, 6b and 6c are formed around the inside of this valve seat 6, with the tapered surface 6b serving as the work face (seat face) for the aforementioned intake valves 1-1 and 1-2. Two tapered surfaces 6d and 6e are formed around the outside of the valve seat 6, and the area where the two tapered surfaces 6d and 6e meet constitutes a blunt protruding portion 6f. The valve seat 7 on the exhaust side has the same cross-sectional shape as the valve seat 6 on the intake side, and any description thereof will therefore be omitted.

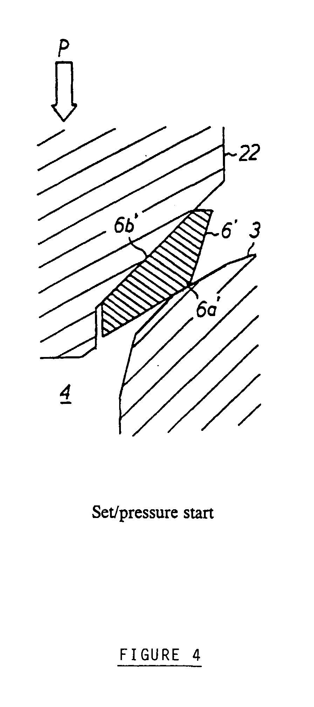

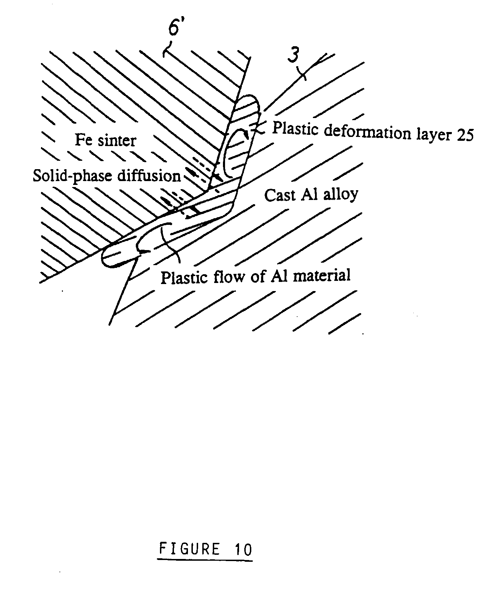

The process for joining the intake-side valve seat 6 to the cylinder head 3 will now be described on the basis of Figures 3 through 10. Figure 3 is a schematic block diagram of a resistance welding apparatus, Figures 4 through 9 are partial cross sections illustrating the process for joining a valve seat, and Figure 10 is an expanded detailed drawing of portion B in Figure 6.

The resistance welding apparatus 20 shown in Figure 3 comprises a pressure device 21, an electrode 22 pressed with said pressure device 21, and a power supply (not shown) designed to supply power to said electrode 22. The electrode 22 is made of copper or a copper alloy, a round hole 22a is bored in the center thereof, and a round guide bar 23 is slidably fitted inside said round hole 22a.

A cylinder head 3 and a seat ring 6' are set in the resistance welding apparatus 20 having this structure in a manner such as that shown in the drawing. Specifically, the cylinder head 3 is positioned by fitting the aforementioned guide bar 23 of the resistance welding apparatus 20 into a valve guide hole 3b formed therein, ensuring that the rim of the opening in the intake port 4 formed in said cylinder head 3 is accurately positioned with respect to the electrode 22. The seat ring 6', as a workpiece for the valve seat 6, is shaped as a ring from an iron-based sinter. Details of the cross-sectional shape thereof are shown in Figure 4.

To join the aforementioned seat ring 6' to the cylinder head 3, said seat ring 6' is set in a manner such that the protruding portion 6a' of the outer periphery thereof comes into contact with the rim of the opening in the intake port 4 of the cylinder head 3 (as shown in Figure 4), the electrode 22 is then lowered along the guide bar 23 by the pressure device 21 (shown in Figure 3) and fitted against the tapered surface 6b' around the inside of the seat ring 6', and a process is started in which the seat ring 6' is pressed with a prescribed welding pressure P by the electrode 22.

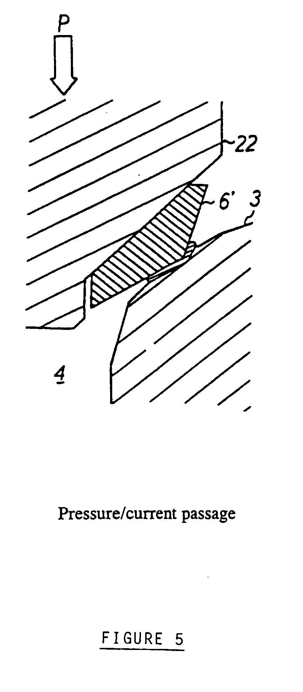

When an electric current is passed through the seat ring 6' by the electrode 22 while the seat ring 6' is pressed by the electrode 22 in such a manner, the electric current flows from said seat ring 6' to the cylinder head 3, and the contact between the two is heated together with the outlying areas. In other words, the cylinder head 3, which is made of a cast aluminum alloy with a lower deformation resistance than that of the iron-based sinter of the seat ring 6', undergoes plastic deformation as shown in Figure 5, and the seat ring 6' gradually penetrates into the cylinder head 3.

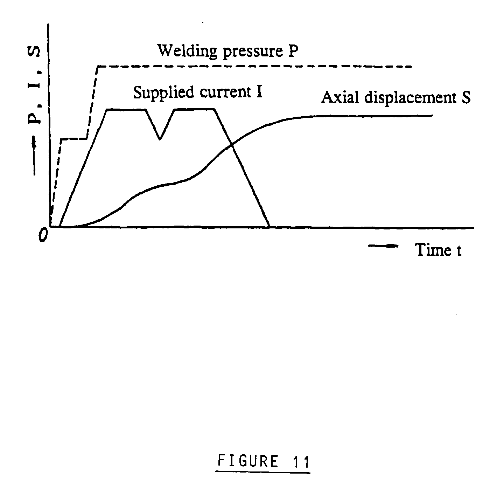

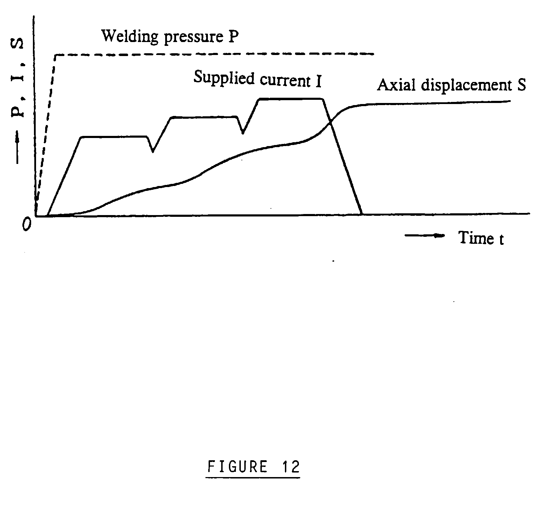

Here, Figures 11 and 12 show examples of patterns for supplying electric current to the electrode 22, welding pressure patterns, amounts of sinking of the seat ring (axial displacement of the electrode 22), and displacement velocities (rates at which the axial displacement of the electrode 22 changes over time). In the example shown in Figure 11, the electric current I is lowered temporarily and then restored to the same level, the welding pressure P is applied in two steps, and the sinking S of the seat ring 6' increases nonlinearly until it reaches the final value. In the example shown in Figure 12, the electric current I is supplied in steps (three steps) such that it gradually increases, the welding pressure P is applied such that the final value is instantaneously achieved, and the sinking S of the seat ring 6' increases nonlinearly until it reaches the final value.

In the practical embodiment under consideration, the temperature during the process for joining the cylinder head 3, which is made of a cast aluminum alloy (low-melting material), is prevented from exceeding the solidus temperature of the cast aluminum alloy and is kept within a temperature range in which the cast aluminum alloy can move as a plastic flow while remaining in the solid phase near the joining interface. The time during which the electric current is passed through the electrode 22 of the resistance welding apparatus 20 should be sufficient to allow the cast aluminum alloy to move as a plastic flow while remaining in the solid phase near the joining interface.

In the joining method pertaining to the present invention, the difference between the solidus temperatures of the dissimilar metals having different melting points is set to 340°C or higher. The melting point of a metal is commonly defined as the lower temperature limit at which the liquid phase develops.

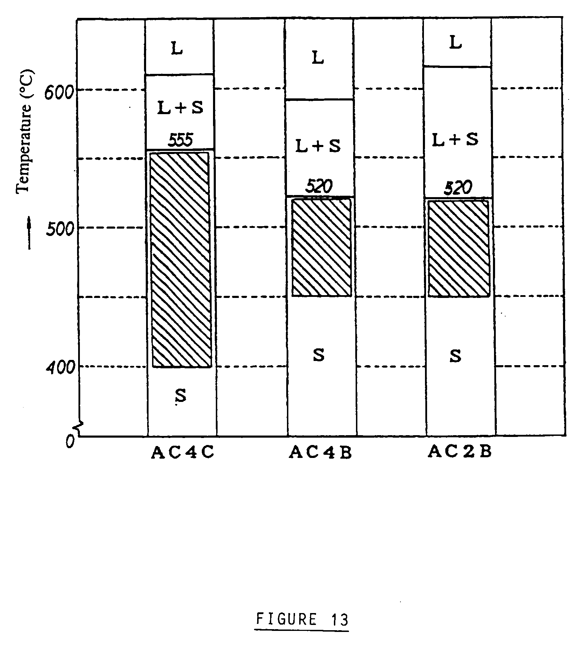

Here, Figure 13 shows the temperature ranges within which various types of cast aluminum alloys (AC4C, AC4B, and AC2B) can move as a plastic flow while remaining in the solid phase. In Figure 13, "L" is the liquid phase, "L + S" is a mixed solid/liquid phase, and "S" is the solid phase. The solidus temperatures for AC4C, AC4B, and AC2B are 555°C, 520°C, and 520°C, respectively. As shown by the hatching in Figure 13, the temperature ranges within which a plastic flow can be maintained in the solid phase are 400 to 555°C for AC4C, and 450 to 520°C for AC4B and AC2B. Because the solidus temperature of an iron-based sinter (high-melting material) is about 1080°C, the difference between the solidus temperature of this iron-based sinter and the solidus temperature of a cast aluminum alloy (low-melting material) is 340°C or greater.

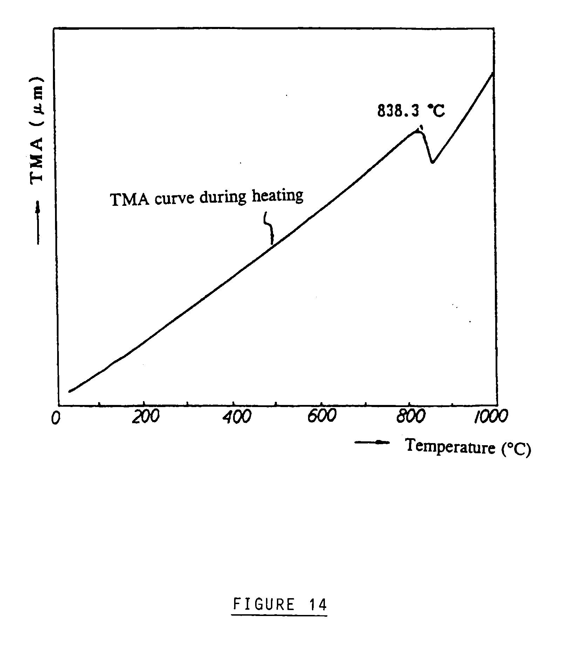

On the other hand, the temperature during the process for joining the seat ring 6', which is made of an iron-based sinter (high-melting material) is prevented from exceeding the phase transition temperature of said iron-based sinter. Here, a TMA curve observed during the heating of the iron-based sinter is shown in Figure 14. The phase transition temperature of the iron-based sinter is 838.3°C, as shown in the drawing, and the temperature during the process for joining the seat ring 6' is kept at or below the phase transition temperature thereof (838.3°C).

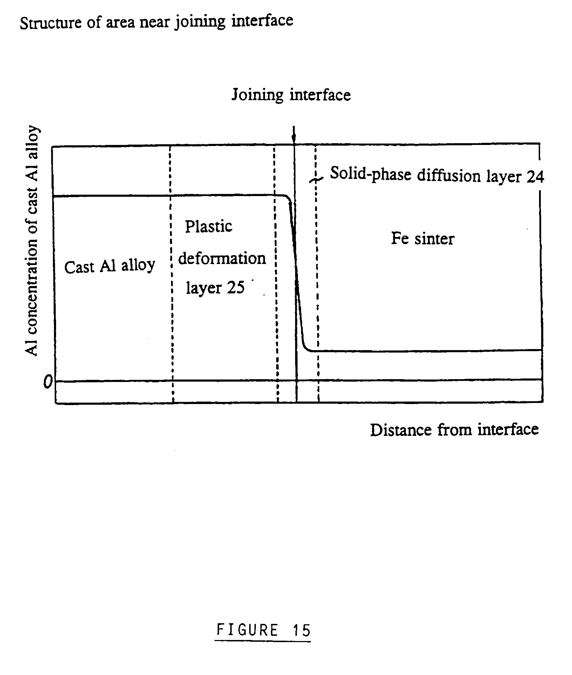

When the area of contact between the seat ring 6' and the cylinder head 3 and the outlying areas are heated within the aforementioned temperature range in such a manner, the result of the atomic motion activated by the increase in temperature is that iron atoms and aluminum atoms are diffused in the solid phase (as shown in Figure 10), and the seat ring 6' is firmly and metallurgically joined to the cylinder head 3 as a result of this solid-phase diffusion, yielding a very thin solid-phase diffusion layer 24 having the composition of an iron-aluminum alloy, as shown in Figure 15. Figure 15 is a diagram depicting the concentration distribution of aluminum, which is the principal component of the cast aluminum alloy, near the joining interface between the seat ring 6' and the cylinder head 3.

Metallurgical bonding is commonly defined as a process which, as opposed to mechanical bonding, prevents the joining interfaces from being displaced in relation to each other by the binding forces exerted by the interfaces on each other. Types of bonding can also be classified from the standpoint of the chemical bond theory into metallurgical bonding (bonding between atoms by means of free electrons acting as intermediaries), covalent bonding, ionic bonding, hydrogen bonding, and the like. There are also types of bonding that result from processes such as the mutual diffusion (solid-phase diffusion, liquid-phase diffusion) of atoms constituting metal materials. The method of the present invention primarily involves joining two metal materials by a combination of one or more of the types of bonding defined above with processes in which the atoms constituting dissimilar metal materials undergo solid-phase diffusion.

At the same time, the cast aluminum alloy constituting the cylinder head 3 forms a plastic flow in the direction of the arrows in Figure 10 at the joining interface with the seat ring 6', the oxide films covering the surfaces of the two metal materials is broken up by the aforementioned plastic flow of the cast aluminum alloy and pushed beyond the joining interface, and debris that has adhered to the joining surfaces of the two metal materials is also removed from the joining interface by the plastic flow of the cast aluminum alloy, with the result that the oxide film or debris is prevented from being entrained by the joining interface.

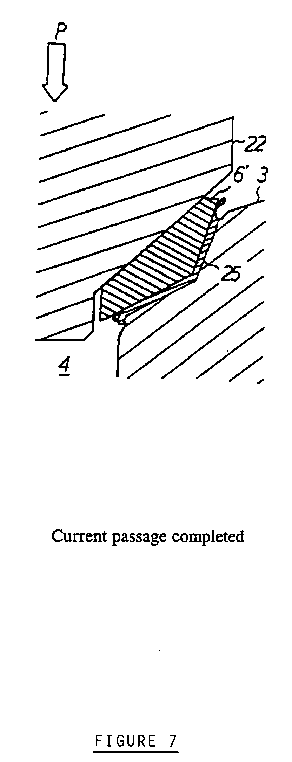

Thus, controlling the pattern for supplying electric current to the electrode 22, the pattern for applying a welding pressure by the electrode 22, the displacement pattern of the electrode 22, and the like in such a manner (see Figures 11 and 12) makes it possible to complete the passage of electric current through the electrode 22 and to firmly join the seat ring 6' to the rim of the opening in the intake port 4 of the cylinder head 3 once the seat ring 6' has sunk into the cylinder head 3 to a prescribed extent, as shown in Figure 7. In addition, as shown in Figures 7 and 15, a plastic deformation layer 25 of prescribed thickness is formed on that side (aluminum alloy side) of the joining interface which faces the cylinder head 3.

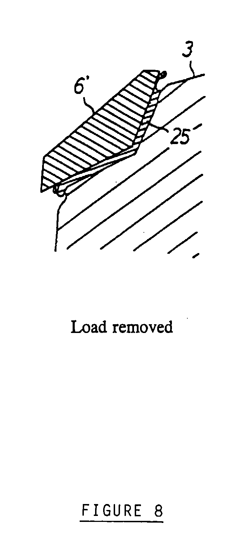

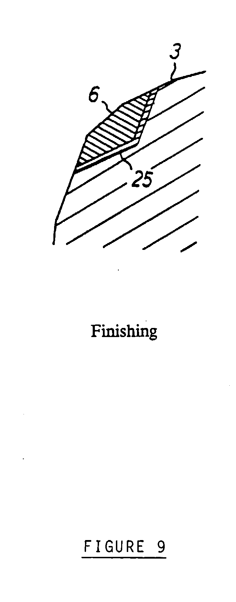

When the seat ring 6' has been metallurgically joined to the rim of the opening in the intake port 4 of the cylinder head 3 in such a manner, the electrode 22 is removed to relieve the pressure on the seat ring 6' (as shown in Figure 8), and the seat ring 6' is ultimately finished by machining to a prescribed shape and subjected to a finishing treatment as a valve seat 6, as shown in Figure 9. Once this is done, the operation involving the joining of said valve seat 6 to the cylinder head 3 is completed, and the valve seat 6 is firmly joined and integrated with the rim of the opening in the intake port 4 of the cylinder head 3.

The above description concerned a process for joining the intake-side valve seat 6, but the exhaust-side valve seat 7 can be firmly joined to the cylinder head 3 in the same manner.

Thus, the joining method pertaining to the present invention involves metallurgically joining valve seats 6 and 7 to a cylinder head 3 by a resistance heat joining technique, and because the temperature during the process for joining the cast aluminum alloy that constitutes the cylinder head 3 is kept at or below the solidus temperature of the cast aluminum alloy, a molten reaction layer is prevented from forming at the joining interface between the two metal materials, and the valve seats 6 and 7 are firmly and metallurgically joined to the rims of the openings in the intake and exhaust ports 4 and 5 of the cylinder head 3 by the solid-phase diffusion of the iron and aluminum atoms constituting the two metal materials.

When the cast aluminum alloy (low-melting material) constituting the cylinder head 3 is heated to or above the characteristic solidus temperature of this alloy, a thicker oxide film forms on the joining surfaces of the cylinder head 3 and the valve seats 6 and 7, a molten reaction layer forms near the joining interface, the thick oxide film or debris penetrates into the molten reaction layer, and the development of defects or residual stress accompanies the solidification shrinkage, lowering the strength with which the valve seats 6 and 7 are joined to the cylinder head 3. By contrast, when the temperature during the process for joining the cast aluminum alloy is set to a level below the lower limit of the aforementioned temperature range (see Figure 13), hardly any active plastic flow of said cast aluminum alloy is produced, neither the oxide film nor the debris is actively removed from the joining interface by the plastic flow, and significant residual stress is generated in the plastic deformation layer, with the result that the strength with which the valve seats 6 and 7 are joined to the cylinder head 3 is lowered, making it impossible to achieve a joining strength capable of withstanding actual use. The temperature during the process for joining the cast aluminum alloy should therefore be kept within the aforementioned temperature range (see Figure 13) close to the solidus temperature of said cast aluminum alloy in order to reduce the residual stress at the plastic deformation layer 25, to activate the joining flow of the cast aluminum alloy, to actively remove oxide films or debris from the joining interface, and to obtain high joining strength.

Because the joining method pertaining to the present invention involves keeping the temperature during the process for joining the cast aluminum alloy (low-melting material) within a temperature range in which said cast aluminum alloy can move as a plastic flow while remaining in the solid phase near the joining interface, the oxide film that has formed on the joining surface of the two metal materials or the debris that has adhered to the joining surface is broken up by the plastic flow near the joining interface of the aluminum alloy material and are removed from the joining interface, preventing the oxide film or debris from being entrained by the joining interface, creating a sound joining interface as a result of direct contact between the two metal materials, and making it possible to firmly join the valve seats 6 and 7 to the cylinder head 3.

Another feature of the method of the present invention is that the temperature during the process for joining an iron sinter, which is the high-melting material that constitutes the valve seats 6 and 7, is kept at or below the phase transition temperature of said iron sinter, with the result that the pronounced hardening caused by the phase transition (martensite transition) of said iron sinter is prevented, sufficient toughness is ensured for the valve seats 6 and 7, and the high impact resistance and other functions required for this material are not impaired.

Yet another feature of the method of the present invention is that the extent to which the valve seats 6 and 7 sink into the cylinder head 3 can be set to a level required by design considerations.

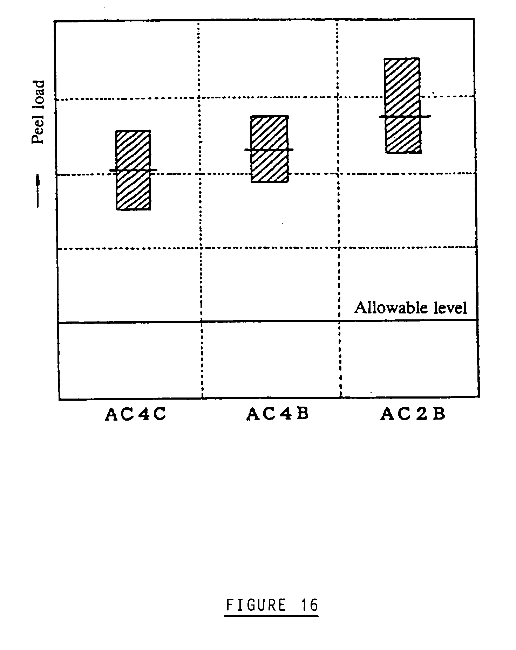

Here, Figure 16 shows the results obtained by measuring the joining strength of valve seats joined to cylinder heads by the method of the present invention. Specifically, Figure 16 shows the results obtained by selecting AC4C, AC4B, and AC2B as the materials for the cylinder heads, and measuring the load (peel load) needed to peel off the valve seats joined to the cylinder heads made of these materials. The peel load exceeded the allowable level in all cases, and the joining strength of each valve seat was sufficient to withstand actual use.

It should be noted that endurance strength sufficient to withstand actual use must be provided because the valve seats of an actual internal combustion engine are exposed to high-temperature combustion gases for extended periods.

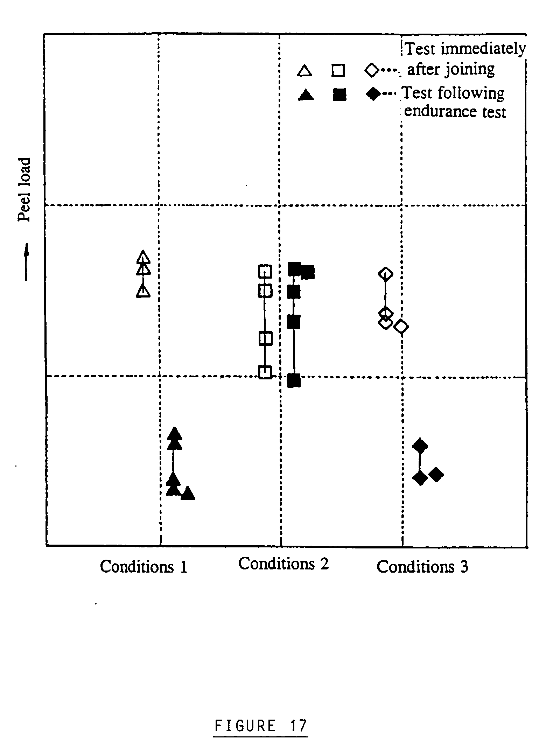

Figure 17 shows the results obtained by measuring the joining strength (peel load) of valve seats immediately after they had been joined under various joining and heating conditions (conditions 1, 2, and 3), as well as the joining strength (endurance strength) achieved after a temperature of 300°C had been maintained for 24 hours. As is shown in Figure 17, the joining strength (peel load) of the valve seats dropped following endurance tests under conditions 1 and 3, but under condition 2 the joining strength (peel load) of the valve seats did not decrease even after endurance tests had been conducted, and remained about the same as the joining strength (peel load) observed immediately after joining.

Although the present invention was described above with reference to a particular case of a method for joining valve seats to cylinder heads in an internal combustion engine, it is apparent that the present invention is applicable to cases in which a seat composed of an SKD material or other material with high abrasion resistance is joined to the top face of a valve lifter composed of a lightweight aluminum alloy, magnesium alloy, or the like; and to other cases in which any dissimilar metal materials having different melting points are joined.

It is apparent from the above description that a merit of the present invention is that it is possible to prevent a molten reaction layer from forming at the joining interface between two metal materials, to firmly and metallurgically join the two metal materials by the solid-phase diffusion of the metal atoms that constitute the two metal materials, and to join the dissimilar metal materials with sufficient strength because the temperature during the process for joining the low-melting material is prevented from exceeding the solidus temperature of said low-melting material in a method for joining dissimilar metal materials having different melting points by a resistance heat joining technique, that is, in a method for metallurgically joining two dissimilar metal materials by forming a plastic deformation layer at least on the low-melting material side of the joining interface.

## Claims

1. Method for joining metals (3, 6') having different melting points by bonding same to each other under high temperatures, **characterized in that** the temperature during the bonding operation is equal to or lower than a solidus temperature of the one metal (3) having a lower melting point.

2. Method according to claim 1, **characterized in that** a plastic deformation layer (25) at least on the side of the metal (3) having the lower melting point is formed.

3. Method according to claim 1 or 2, **characterized in that** the difference of the respective solidus temperatures is equal to or higher than 340°C.

4. Method according to at least one of the preceding claims 1 to 3, **characterized in that** the temperature during the bonding operation is maintained within a temperature range in which the metal having the lower melting point can move as a plastified flow near the joining or bonding interface although still remaining in the solid phase.

5. Method according to claim 4, **characterized in that** the temperature during the bonding operation is maintained on a value close to the solidus temperature of the metal having the lower melting point.

6. Method according to at least one of the preceding claims 1 to 5, **characterized in that** the temperature during the bonding operation is lower than the phase transition temperature of the metal having the higher melting point.

7. Method according to at least one of the preceding claims 1 to 6, **characterized in that** the penetration depth of the metal having the higher melting point into the metal having the lower melting point is controlled by controlling the supply pattern of the applied electric current to an electrode (22) and/or the apply pattern of the bonding pressure by the electrode (22) and/or the displacement velocity pattern of the electrode (22).

8. Method according to claim 7, **characterized in that** the electric current is applied with such an amount that at least the metal having the lower melting point moves as a plastified flow although still remaining in the solid phase.

9. Method according to at least one of the preceding claims 1 to 8, **characterized in that** the metal having the higher melting point is a valve seat ring (6') composed of an iron-based sinter and that the metal having the lower melting point is a cylinder head (3) composed of cast aluminum alloy.

10. Method according to claim 9, **characterized in that** the valve seat ring (6') is filled with another metal, for example copper, by infiltration.

11. Method according to claim 9 or 10, **characterized in that** the outer peripheral surface of the valve seat ring (6') comprises two tapered surfaces (6d, 6e) and that the area where the two tapered surfaces (6d, 6e) meet is a blunt protruding portion (6f).

12. Method according to at least one of the preceding claims 7 to 11, **characterized in that** the electric current (I) is increased to a certain level, maintained on this level, temporarily lowered, then restored to the certain level and finally decreased to zero and that the welding pressure (P) is applied in two steps.

13. Method according to at least one of the preceding claims 7 to 11, **characterized in that** the electric current (I) is increased to a first level, maintained on this level, temporarily lowered, then increased to a second higher level, maintained on this higher level, temporarily lowered, then increased to a third still higher level and finally decreased to zero, and that the welding pressure is applied such that the final value is instantaneously achieved.

14. Method according to at least one of the preceding claims 1 to 13, **characterized in that** the bonding operation is a combination of one or more types of bonding defined by metallurgical bonding, covalent bonding, ionic bonding, hydrogen bonding, solid-phase diffusion, and/or liquid-phase diffusion with processes in which the atoms constituting different materials undergo solid-phase diffusion.

15. Valve seat (6) provided in a cylinder head (3) of an internal combustion engine, the metal of said valve seat (6) having a higher melting point than that of the metal of said cylinder head (3), **characterized in that** a difference between the respective solidus temperatures is equal to or higher than 340°C.

16. Valve seat according to claim 15, **characterized by** a plastic deformation layer (25) at least on the cylinder head side.

17. Valve seat according to claim 15 or 16, **characterized in that** the valve seat (6) is composed of an iron-based sinter and that the cylinder head (3) is composed of cast aluminum alloy.

18. Valve seat according to claim 17, **characterized in that** the valve seat (6') is filled with another metal, for example copper, by infiltration.
